# EUROPÄISCHE PATENTSCHRIFT

(11) **EP 2 773 931 B1**
(45) Veröffentlichungstag und Bekanntmachung des Hinweises auf die Patenterteilung: **03.01.2018**
(21) Anmeldenummer: 12784479.3
(22) Anmeldetag: 10.10.2012
(51) Int. Cl.: G01K 13/00, H05B 1/02

(54) **VORRICHTUNG ZUM ERFASSEN UND ANZEIGEN ZUMINDEST EINES FÜR EINEN GARPROZESS RELEVANTEN PARAMETERS**
APPLIANCE FOR DETECTING AND DISPLAYING AT LEAST ONE PARAMETER RELEVANT FOR A COOKING PROCESS
DISPOSITIF POUR DÉTECTER ET AFFICHER AU MOINS UN PARAMÈTRE PERTINENT POUR UN PROCESSUS DE CUISSON

(30) Priorität: 31.10.2011 DE 102011085525
(43) Veröffentlichungstag der Anmeldung: 10.09.2014
(73) Patentinhaber: WMF Württembergische Metallwarenfabrik AG, 73309 Geislingen/Steige (DE)
(72) Erfinder: BARTH, Peter, 89601 Schelklingen (DE); DÖPPE, Matthias, 89129 Langenau (DE); NEUMAYER, Martin, 89547 Gerstetten-Dettingen (DE)
(74) Vertreter: BRP Renaud & Partner mbB Rechtsanwälte Patentanwälte Steuerberater
(86) Internationale Anmeldenummer: PCT/EP2012/070083
(87) Internationale Veröffentlichungsnummer: WO 2013/064346

(56) Entgegenhaltungen:
- DE-A1-102008 051 265

## Beschreibung

Die vorliegende Erfindung betrifft eine Vorrichtung zum Erfassen und Anzeigen zumindest eines für einen Garprozess relevanten Parameters in einem Gargerät. Die Erfindung betrifft außerdem ein mit einer derartigen Einrichtung ausgestattetes Gargerät, insbesondere einen Kochtopf oder einen Schnellkochtopf.
Um das Garen von Lebensmitteln vereinfachen zu können, sind bereits eine Vielzahl von Hilfsmitteln, wie beispielsweise Timer und/oder Temperaturanzeigen bekannt. Derartige Timer bzw. Temperaturanzeigen erfassen dabei jedoch ausschließlich einen individuellen Parameter, der jedoch viele andere, den Garprozess ebenfalls beeinflussende Parameter, nicht berücksichtigt. Wird beispielsweise über den Timer eine vordefinierte Garzeit eingestellt, so bleibt ein gutes Garergebnis nach Ablauf der im Timer eingegebenen Zeit trotzdem offen, da der Timer nicht in der Lage ist, die im Gargerät herrschende Gartemperatur und/oder individuelle Gardaten des jeweils zu garenden Lebensmittels zu berücksichtigen. Aus diesem Grund liefern auch die zuvor genannten Hilfsmittel oftmals nur unzureichende Garergebnisse, die insbesondere ungeübten Laien die Freude am Kochen verderben können. Das Dokument DE 10 2008 051 265 A1 ist ein Beispiel für den Stand der Technik und beschreibt Steuerungs-, Regelungs- und Bedienvorrichtungen für Gargeräte. Die vorliegende Erfindung beschäftigt sich mit dem Problem, eine Vorrichtung anzugeben, mittels welcher ein Garprozess besonders einfach überwacht werden kann.

Die vorliegende Erfindung beschäftigt sich daher mit dem Problem, eine Vorrichtung anzugeben, mittels welcher ein Garprozess besonders einfach überwacht werden kann.

Dieses Problem wird erfindungsgemäß durch die Gegenstände der unabhängigen Ansprüche gelöst. Vorteilhafte Ausführungsformen sind Gegenstand der abhängigen Ansprüche.

Die vorliegende Erfindung beruht auf dem allgemeinen Gedanken, eine Vorrichtung zum Erfassen und Anzeigen zumindest eines für einen Garprozess relevanten Parameters in einem Gargerät anzugeben, die in der Lage ist, den Garprozess sowohl unter Berücksichtigung von lebensmittelspezifischen Soll-Garwerten als auch unter Berücksichtigung von tatsächlich im Gargerät herrschenden Ist-Garwerten zu überwachen. Die erfindungsgemäße Vorrichtung weist hierzu eine Einstelleinrichtung auf, über die zumindest ein zu garendes Lebensmittel auswählbar ist, das in dem Gargerät gegart werden soll. Zusätzlich weist die Vorrichtung einen Datenspeicher auf, in dem lebensmittelspezifische Soll-Garwerte, insbesondere auch unter Berücksichtigung der sogenannten RGT-Regel (Reaktionsgeschwindigkeit-Temperatur-Regel) hinterlegt sind. Über eine Sensoreinrichtung ist die Vorrichtung in der Lage, zumindest einen den Garprozess beeinflussenden Ist-Garwert im Gargerät, das heißt beispielsweise im Kochtopf, zu erfassen. Über einen Mikrokontroller und/oder Mikroprozessor erfolgt ein Soll-Ist-Vergleich, der eine Abweichung zwischen den im Datenspeicher hinterlegten lebensmittelspezifischen Soll-Garwerten und den im Gargerät tatsächlich herrschenden Ist-Garwerten ermittelt. Die ermittelte Soll-Ist-Garwertabweichung wird dann über eine zur Vorrichtung gehörende Anzeigeeinrichtung angezeigt und signalisiert darüber dem Benutzer, wie er den weiteren Garprozess steuern soll. Beispielsweise kann bei einer Soll-Ist-Temperaturabweichung der Benutzer angehalten werden, die Energiezufuhr zu erhöhen oder zu erniedrigen und dadurch die im Gargerät tatsächlich herrschende Ist-Temperatur wieder der im Datenspeicher hinterlegten SollTemperatur anzunähern. Mit der erfindungsgemäßen Vorrichtung kann der Benutzerkomfort deutlich gesteigert werden.

Bei einer vorteilhaften Weiterbildung der erfindungsgemäßen Lösung weist die Anzeigeeinrichtung ein Display auf, das die Soll-Ist-Garwertabweichung in Form eines Pfeils anzeigt, wobei die Länge des Pfeils mit der Größe der Soll-Ist-Garwertabweichung korreliert. Durch die Visualisierung beispielsweise einer Temperaturdifferenz zwischen einer im Datenspeicher hinterlegten und vorgegebenen Soll-Gartemperatur und einer im Gargerät herrschenden Ist-Gartemperatur mit Hilfe eines Pfeils, wird dem Benutzer eine sehr einfache, intuitiv verständliche Handlungsanleitung zur Steuerung der Energiezufuhr über die Heizquelle, beispielsweise den Herd, gegeben. Dabei kann der jeweilige Abstand zwischen der Soll-Gartemperatur und der Ist-Gartemperatur über die Pfeillänge angezeigt werden, das heißt je länger der Pfeil ist, desto weiter ist die Ist-Gartemperatur von der Soll-Gartemperatur entfernt. Je kürzer dagegen der Pfeil ist, desto näher ist die Ist-Gartemperatur an der Soll-Gartemperatur. Zusätzlich oder alternativ ist auch vorstellbar, dass die Anzeigeeinrichtung derart ausgebildet ist, dass der Pfeil in Abhängigkeit der Soll-Ist-Garwertabweichung blinkt, wobei die Frequenz bei geringer werdender Soll-Ist-Garwertabweichung ansteigt. Der Garwert bzw. die Garwertabweichung stehen dabei als Oberbegriff für beispielsweise eine Temperatur, einen Druck oder ähnliches. Kommt somit beispielsweise die Ist-Gartemperatur der Soll-Gartemperatur näher, so kann der auf dem Display angezeigte Pfeil immer schneller blinken, das heißt mit höherer Frequenz, wobei bei nahezu identischer Ist-Gartemperatur und Soll-Gartemperatur (z.B. +/- 1°C) das Blinken beendet und ein Doppelpfeil angezeigt wird. Neben der rein visuellen Anzeige kann die Anzeigeeinrichtung selbstverständlich auch derart ausgebildet sein, dass sie ein akustisches Signal erzeugt, sofern die erfasste Soll-Ist-Garwertabweichung außerhalb eines vordefinierten Toleranzbereichs liegt. Liegt die Soll-Ist-Garwertabweichung innerhalb des vordefinierten Toleranzbereichs, so verstummt das akustische Signal. Selbstverständlich ist auch eine Änderung der Frequenz des akustischen Signals in Anlehnung an die visuelle Pfeildarstellung vorstellbar.

Zweckmäßig weist die Vorrichtung eine Basisstation und zumindest zwei jeweils am zugehörigen Gargerät, bspw. am zugehörigen Schnellkochtopf, befestigbare Satelliten auf, die drahtlos mit der Basisstation kommunizieren, wobei die Einstelleinrichtung, der Datenspeicher und der Mikrokontroller und/oder Mikroprozessor in der Basisstation und die Sensoreinrichtung am jeweiligen Satellit angeordnet sind. Durch diese Ausführungsform ist es möglich, mit lediglich einer einzigen Basisstation mehrere Gargeräte individuell zu steuern bzw. zu regeln und dadurch zu betreuen. Alternativ dazu kann auch vorgesehen sein, dass die Vorrichtung samt Einstelleinrichtung, Datenspeicher, Mikrokontroller und/oder Mikroprozessor und Sensoreinrichtung komplett am Gargerät angeordnet ist. Bei dieser Ausführungsform weist somit jedes Gargerät eine eigene Vorrichtung auf, wobei diese selbstverständlich in der Lage sein können, drahtlos miteinander zu kommunizieren.

Eine drahtlose Kommunikation zwischen den einzelnen Satelliten und der zugehörigen Basisstation kann bspw. über WLAN, Bluetooth, GSM, UMTS, DECT und RFID erfolgen, wobei die jeweiligen Abkürzungen in den Ansprüchen erläutert sind. Besonders sog. RFID-Chips besitzen dabei den Vorteil, dass diese über Radiowellen mit Energie versorgt werden können und in diesem Fall keine eigene und autarke Energieversorgung erfordern. Selbstverständlich ist auch eine alternative Energieversorgung, bspw. mittels PTC-Elementen oder Solarzellen denkbar. Auch eine WLAN-Übertragung von Daten in lokale Netzwerke und Auswertung derselben ist prinzipiell vorstellbar.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch:
- Fig. 1: eine erfindungsgemäße Vorrichtung, die an einem Deckel eines Gargefäßes befestigbar ist,
- Fig. 2: eine Basisstation mit einer derartigen erfindungsgemäßen Vorrichtung.

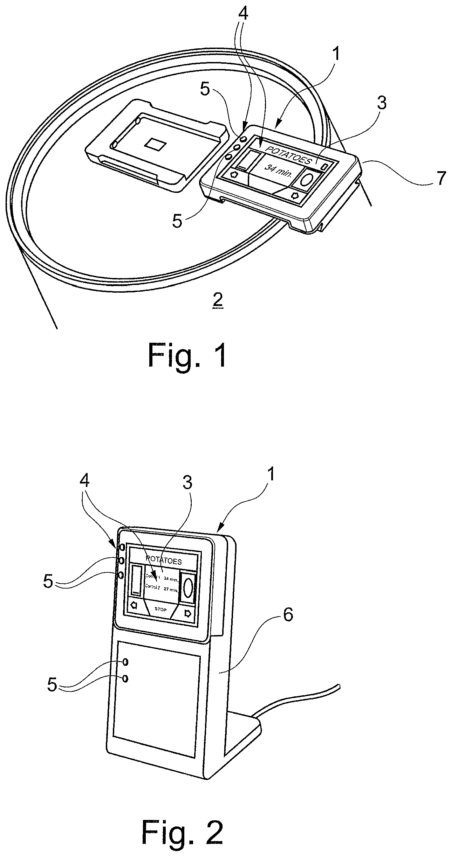

Entsprechend der Fig. 1, weist eine erfindungsgemäße Vorrichtung 1 zum Erfassen und Anzeigen zumindest eines für einen Garprozess relevanten Parameters in einem lediglich angedeuteten Gargerät 2, beispielsweise einem Kochtopf oder einem Schnellkochtopf, eine Einstelleinrichtung 3 auf, hier in der Art eine Touchscreens, über die zumindest ein zu garendes Lebensmittel auswählbar ist, das in dem Gargerät 2 gegart werden soll. Ebenso umfasst die erfindungsgemäße Vorrichtung 1 einen Datenspeicher, in dem lebensmittelspezifische Soll-Garwerte, insbesondere unter Berücksichtigung der sogenannten RGT-Regel (Reaktionsgeschwindigkeit-Temperatur-Regel) hinterlegt sind. Unter derartigen Soll-Garwerten können insbesondere Soll-Gartemperaturen bzw. Soll-Garzeiten verstanden werden. Neben dem Datenspeicher umfasst die erfindungsgemäße Vorrichtung 1 auch eine Sensoreinrichtung zur Erfassung von zumindest einem im Gargerät 2 tatsächlich herrschenden und den Garprozess beeinflussenden Ist-Garwert, sowie zumindest einen Mikrokontroller und/oder Mikroprozessor zur Ermittlung einer Soll-Ist-Garwertabweichung. Von besonderer Bedeutung jedoch ist bei der erfindungsgemäßen Vorrichtung 1 jedoch eine Anzeigeeinrichtung 4 zum Anzeigen der ermittelten Soll-Ist-Garwertabweichung.

Die Anzeigeeinrichtung 4 kann beispielsweise in der Art eines Displays ausgebildet sein, das die Soll-Ist-Garwertabweichung in Form eines Pfeils darstellt, wobei die Länge des Pfeils mit der Größe der Soll-Ist-Garwertabweichung vorzugsweise korreliert. Je länger daher der Pfeil ist, umso größer ist auch die zugehörige Soll-Ist-Garwertabweichung. Die Anzeigeeinrichtung 4 kann darüber hinaus derart ausgebildet sein, dass der angezeigte Pfeil in Abhängigkeit der Soll-Ist-Garwertabweichung blinkt, wobei die Frequenz bei geringer werdender Soll-Ist-Garwertabweichung ansteigt. Ist der Soll-Garwert nahezu identisch dem Ist-Garwert, kann ein Blinken des Pfeils erlöschen bzw. ein Doppelpfeil angezeigt werden, der dem Benutzer signalisiert, dass eine weitere Steuerung der Energiezufuhr nicht mehr erforderlich ist.

Zusätzlich oder alternativ kann die Anzeigeeinrichtung 4 zumindest zwei LEDs 5 aufweisen, nämlich beispielsweise eine rote und eine grüne LED, wobei die Soll-Ist-Garwertabweichung bei Aufleuchten der grünen LED innerhalb eines vordefinierten Toleranzbereichs liegt, wogegen die Soll-Ist-Garwertabweichung bei Aufleuchten der roten LED außerhalb des vordefinierten Toleranzbereichs liegt. Durch diese durch die LEDs 5 erzeugte Ampelfunktion kann dem Benutzer auf besonders einfach aber zugleich eingängige Weise visuell dargestellt werden, ob die im Gargerät 2 herrschenden Ist-Gar-Werte mit den im Datenspeicher der Vorrichtung 1 hinterlegten und lebensmittelspezifische individuellen Soll-GarWerten übereinstimmen oder nicht und ob beispielsweise die Energiezufuhr eines Herdes, auf welchem das Gargerät 2 steht, gedrosselt oder gesteigert werden muss. Bei Aufleuchten der roten LED kann zusätzlich im Display der Anzeigeeinrichtung 4 eine Statusmeldung bzw. eine Handlungsanweisung für das weitere Vorgehen angezeigt werden, wodurch dem Benutzer unmittelbar eine konkrete Anweisung an die Hand gegeben werden kann.

Da ein rein visuelles Anzeigen der Soll-Ist-Garwertabweichung insbesondere bei schlecht sehenden Personen und insbesondere auch bei älteren Personen oftmals nicht ausreichend ist, kann die Anzeigeeinrichtung 4 zusätzlich oder auch alternativ derart ausgebildet sein, dass sie ein akustisches Signal erzeugt, sofern die Soll-Ist-Wert-Abweichung außerhalb des zuvor festgelegten und vordefinierten Toleranzbereichs liegt. Hierdurch kann insbesondere auch älteren Benutzern das schmackhafte und punktgenaue Zubereiten von Lebensmitteln und damit das Kochen erleichtert werden. Denkbar ist selbstverständlich auch, dass das akustische Signal von der Anzeigeeinrichtung 4 nicht nur erzeugt wird, sofern der vordefinierte Toleranzbereich verlassen wird, sondern ein frequenzabhängiges oder lautstärkeabhängiges Signal erzeugt wird, welches dem Benutzer permanent die vorliegende Soll-Ist-Garwertabweichung akustisch anzeigt.

Generell kann die Vorrichtung 1 eine Basisstation 6 (vgl. auch Fig. 2) sowie zumindest einen am zugehörigen Gargerät 2 befestigbaren Satelliten 7 fassen, der drahtlos mit der Basisstation 6 kommuniziert, wobei in diesem Fall die Einstelleinrichtung 3, der Datenspeicher und der Mikrokontroller und/oder Mikroprozessor in der Basisstation 7 und die Sensoreinrichtung zusammen mit der Anzeigeeinrichtung am jeweiligen Satellit 7 angeordnet sind. Alternativ ist auch vorstellbar, dass die Basisstation 7 lediglich in der Art eines Pagers ausgebildet ist, so dass die Vorrichtung 1 samt Einstelleinrichtung 3, Datenspeicher, Mikrokontroller und/oder Mikroprozessor, Sensoreinrichtung sowie Anzeigeeinrichtung 4 im Satellit 7 zusammengefasst ist und am Gargerät 2 angeordnet werden kann. Es ist selbstverständlich auch denkbar, dass die Anzeigeeinrichtung 4, die den Garprozess überwacht und gegebenenfalls dem Benutzer Signale übermittelt, sowohl an der Vorrichtung 1, das heißt am Satellit 7 als auch zusätzlich an der Basisstation 6 angeordnet sind.

Eine Kommunikation zwischen dem Satelliten 7 einerseits und der Basisstation 6 andererseits kann beispielsweise über WLAN, über Bluetooth, über GSM, UMTS, DECT oder RFID erfolgen.

Die Sensoreinrichtung der Vorrichtung 1 kann beispielsweise einen Temperatursensor, insbesondere einen NTC oder PTC-Widerstandssensor, einen Drucksensor und/oder einen Füllstandsensor aufweisen, wobei Temperatur- und Drucksensor besonders wichtig sind.

Mit der erfindungsgemäßen Vorrichtung 1 kann einem im Kochen ungeübten Benutzer der Garprozess, das heißt das Kochen, erleichtert werden, da er die zu garenden Lebensmittel einfach auswählen und deren Garprozess über die Vorrichtung 1 überwachen kann. Durch die visuelle und/oder akustische Signalerzeugung ist es dem Benutzer zusätzlich möglich, unabhängig von dem eigentlichen Garprozess weitere Prozesse in der Küche zu betreuen.

## Patentansprüche

1. Vorrichtung (1) zum Erfassen und Anzeigen zumindest eines für einen Garprozess relevanten Parameters in einem Gargerät (2) mit
- einer Einstelleinrichtung (3), über welche zumindest ein zu garendes Lebensmittel auswählbar ist, das in dem Gargerät (2) gegart werden soll,
- zumindest einer Sensoreinrichtung zur Erfassung von zumindest einem, den Garprozess beeinflussenden Ist-Garwert,
- zumindest einem Mikrokontroller und/oder Mikroprozessor zur Ermittlung einer Soll-Ist-Garwertabweichung,
- zumindest einer Anzeigeeinrichtung (4) zum Anzeigen der Soll-Ist-Garwertabweichung,
**dadurch gekennzeichnet,**
- **dass** ein Datenspeicher vorgesehen ist, in welchem lebensmittelspezifische Soll-Garwerte, insbesondere unter Berücksichtigung der RGT-Regel (Reaktionsgeschwindigkeit-Temperatur-Regel) hinterlegt sind,
- **dass** die Anzeigeeinrichtung (4) ein Display aufweist, welches die Soll-Ist-Garwertabweichung in Form eines Pfeils anzeigt, wobei die Länge des Pfeils mit der Größe der Soll-Ist-Garwertabweichung korreliert,
- **dass** die Anzeigeeinrichtung (4) derart ausgebildet ist, dass der Pfeil in Abhängigkeit der Soll-Ist-Garwertabweichung blinkt, wobei die Frequenz bei geringer werdender Soll-Ist-Garwertabweichung ansteigt.

2. Vorrichtung nach Anspruch 1,
**dadurch gekennzeichnet,**
**dass** die Sensoreinrichtung zumindest einen Temperatursensor, wie z. B. ein NTC- oder PTC-Widerstand, einen Drucksensor und/oder einen Füllstandssensor aufweist.

3. Vorrichtung nach einem der vorhergehenden Ansprüche,
**dadurch gekennzeichnet,**
**dass** die Anzeigeeinrichtung (4) zumindest zwei LED (5) aufweist, nämlich eine rote und eine grüne LED, wobei die Soll-Ist-Garwertabweichung bei Aufleuchten der grünen LED innerhalb eines vordefinierten Toleranzbereichs liegt, wogegen die Soll-Ist-Garwertabweichung bei Aufleuchten der roten LED außerhalb des vordefinierten Toleranzbereichs liegt.

4. Vorrichtung nach einem der vorhergehenden Ansprüche,
**dadurch gekennzeichnet,**
**dass** die Anzeigeeinrichtung (4) derart ausgebildet ist, dass sie ein akustisches Signal erzeugt, sofern die erfasste Soll-Ist-Garwertabweichung außerhalb eines vordefinierten Toleranzbereichs liegt.

5. Vorrichtung nach einem der vorhergehenden Ansprüche,
**dadurch gekennzeichnet**,
- die Vorrichtung (1) eine Basisstation (6) und zumindest einen am zugehörigen Gargerät (2) befestigbaren Satelliten (7) aufweist, der drahtlos mit der Basisstation (6) kommuniziert, wobei die Einstelleinrichtung (3), der Datenspeicher und der Mikrokontroller und/oder Mikroprozessor in der Basisstation (6) und die Sensoreinrichtung zusammen mit der Anzeigeeinrichtung (4) am jeweiligen Satellit (7) angeordnet sind, oder
- dass die Vorrichtung (1) samt Einstelleinrichtung (3), Datenspeicher, Mikrokontroller und/oder Mikroprozessor, Anzeigeeinrichtung (4) und Sensoreinrichtung am Gargerät angeordnet sind.

6. Vorrichtung nach Anspruch 5, erste Alternative,
**dadurch gekennzeichnet,**
**dass** eine Kommunikation zwischen Satellit (7) und Basisstation (6) über
- WLAN (Wireless Local Area Network),
- Bluetooth,
- GSM (Global System for Mobile Communications),
- UMTS (Universal Mobile Telecommunications System),
- DECT (Digital Enhanced Cordless Telecommunications),
- RFID (Radio Frequency Identification) erfolgt.

7. Gargerät (2), insbesondere ein Kochtopf oder ein Schnellkochtopf, mit einer Vorrichtung (1) nach einem der vorhergehenden Ansprüche.

8. Gargerät nach Anspruch 7,
**dadurch gekennzeichnet,**
**dass** die Vorrichtung (1) in den Deckel des Gargeräts (2) integriert oder von diesem abnehmbar ausgebildet ist.

## Claims

1. Device (1) for detecting and displaying at least one parameter relevant for a cooking process in a cooking appliance (2) with
- an adjustment device (3) by means of which at least one food to be cooked can be selected that is to be cooked in the cooking appliance (2),
- at least one sensor device for detecting at least one actual cooking value influencing the cooking process,
- at least one microcontroller and/or microprocessor for determining a setpoint/actual cooking value deviation,
- at least one display device (4) for displaying the setpoint/actual cooking value deviation,
**characterised in that**
- a data memory is provided in which food-specific setpoint cooking values are stored, in particular taking into account the RST rule (reaction speed-temperature rule),
- the display device (4) has a display that displays the setpoint/actual cooking value deviation in the form of an arrow, wherein the length of the arrow correlates with the size of the setpoint/actual cooking value deviation,
- the display device (4) is designed in such a way that the arrow flashes as a function of the setpoint/actual cooking value deviation, wherein the frequency increases as the setpoint/actual cooking value deviation decreases.

2. Device according to claim 1,
**characterised in that**
the sensor device has at least one temperature sensor, for example an NTC or PTC resistor, a pressure sensor and/or a fill level sensor.

3. Device according to any of the preceding claims,
**characterised in that**
the display device (4) has at least two LEDs (5), namely a red and a green LED, wherein the setpoint/actual cooking value deviation lies within a predefined tolerance range when the green LED lights up, whereas the setpoint/actual cooking value deviation lies outside the predefined tolerance range when the red LED lights up.

4. Device according to any of the preceding claims,
**characterised in that**
the display device (4) is designed in such a way that it generates an acoustic signal provided that the detected setpoint/actual cooking value deviation lies outside a predefined tolerance range.

5. Device according to any of the preceding claims,
**characterised in that**
- the device (1) has a base station (6) and at least one satellite (7) that can be attached to the associated cooking appliance (2) and that communicates wirelessly with the base station (6), wherein the adjustment device (3), the data memory and the microcontroller and/or microprocessor are arranged in the base station (6) and the sensor device is arranged together with the display device (4) on the respective satellite (7), or
- the device (1) together with the adjustment device (3), data memory, microcontroller and/or microprocessor, display device (4) and sensor device are arranged on the cooking appliance.

6. Device according to claim 5, the first alternative,
**characterised in that**
a communication between the satellite (7) and the base station (6) takes place via
- WLAN (Wireless Local Area Network),
- Bluetooth,
- GSM (Global System for Mobile Communications),
- UMTS (Universal Mobile Telecommunications System),
- DECT (Digital Enhanced Cordless Telecommunications),
- RFID (Radio Frequency Identification).

7. Cooking appliance (2), in particular a cooking pot or a pressure cooker, with a device (1) according to any of the preceding claims.

8. Cooking appliance according to claim 7,
**characterised in that**
the device (1) is integrated into the lid of the cooking appliance (2) or is designed so as to be detachable therefrom.

## Revendications

1. Dispositif (1) pour détecter et afficher au moins un paramètre pertinent pour un processus de cuisson dans un appareil de cuisson (2) avec
- un système de réglage (3) par le biais duquel peut être sélectionnée au moins une denrée alimentaire à cuire qui doit être cuite dans l'appareil de cuisson (2),
- au moins un système de capteur pour détecter au moins une valeur réelle de cuisson influençant le processus de cuisson,
- au moins un microcontrôleur et/ou microprocesseur pour déterminer un écart entre valeur prescrite et valeur réelle de cuisson,
- au moins un système d'affichage (4) pour afficher l'écart entre valeur prescrite et valeur réelle de cuisson,
**caractérisé en ce**
- **qu'**il est prévu une mémoire de données dans laquelle sont déposées des valeurs de cuisson prescrites spécifiques à des denrées alimentaires, en particulier compte tenu de la règle RGT (règle vitesse de réaction - température),
- **que** le système d'affichage (4) présente un dispositif d'affichage qui affiche l'écart entre valeur prescrite et valeur réelle de cuisson sous forme d'une flèche, dans lequel la longueur de la flèche est corrélée avec la grandeur de l'écart entre valeur prescrite et valeur réelle de cuisson,
- **que** le système d'affichage (4) est conçu de manière que la flèche clignote en fonction de l'écart entre valeur prescrite et valeur réelle de cuisson, dans lequel la fréquence augmente lorsque l'écart entre valeur prescrite et valeur réelle de cuisson devient plus faible.

2. Dispositif selon la revendication 1,
**caractérisé en ce**
**que** le système de capteur présente au moins un capteur de température, tel que, par exemple, une résistance CTN ou CTP, un capteur de pression et/ou un capteur de niveau.

3. Dispositif selon l'une quelconque des revendications précédentes,
**caractérisé en ce**
**que** le système d'affichage (4) présente au moins deux DEL (5), à savoir une DEL rouge et une verte, dans lequel l'écart entre valeur prescrite et valeur réelle de cuisson est situé, en cas d'allumage de la DEL verte, à l'intérieur d'une plage de tolérances prédéfinie, par contre l'écart entre valeur prescrite et valeur réelle de cuisson est situé, en cas d'allumage de la DEL rouge, en dehors de la plage de tolérances prédéfinie.

4. Dispositif selon l'une quelconque des revendications précédentes,
**caractérisé en ce**
**que** le système d'affichage (4) est conçu de manière qu'il génère un signal acoustique dans la mesure où l'écart entre valeur prescrite et valeur réelle de cuisson détecté est situé en dehors d'une plage de tolérances prédéfinie.

5. Dispositif selon l'une quelconque des revendications précédentes,
**caractérisé en ce que**
- le dispositif (1) présente une station de base (6) et au moins un satellite (7), pouvant être fixé à l'appareil de cuisson (2) associé, qui communique sans fil avec la station de base (6), dans lequel le système de réglage (3), la mémoire de données et le microcontrôleur et/ou microprocesseur sont disposés dans la station de base (6) et le système de capteur conjointement avec le système d'affichage (4), au niveau du satellite (7) concerné, ou
- le dispositif (1) avec le système de réglage (3), la mémoire de données, le microcontrôleur et/ou le microprocesseur, le système d'affichage (4) et le système de capteur sont disposés au niveau de l'appareil de cuisson.

6. Dispositif selon la revendication 5, première variante,
**caractérisé en ce**
**qu'**une communication entre satellite (7) et station de base (6) est effectuée par le biais de
- WLAN (réseau local),
- Bluetooth,
- GSM (système mondial de communication avec les mobiles),
- UMTS (système universel de télécommunication avec les mobiles),
- DECT (télécommunications numériques améliorées sans cordon),
- RFID (radio-identification).

7. Appareil de cuisson (2), en particulier une cocotte ou une Cocotte-Minute, avec un dispositif (1) selon l'une quelconque des revendications précédentes.

8. Appareil de cuisson selon la revendication 7,
**caractérisé en ce**
**que** le dispositif (1) est conçu intégré dans le couvercle de l'appareil de cuisson (2) ou séparable de celui-ci.
